# FASCICULE DE BREVET EUROPEEN

(11) **EP 2 558 341 B1**
(45) Date de publication et mention de la délivrance du brevet: **08.07.2015**
(21) Numéro de dépôt: 11715991.3
(22) Date de dépôt: 25.03.2011
(51) Int. Cl.: B60W 50/029, B60W 50/08, B60W 30/182, B60K 23/08

(54) **PROCEDE DE GESTION D'UN DISPOSITIF DE REPARTITION DU COUPLE MOTEUR LORS D'UNE DEFAILLANCE DE SON BOUTON DE SELECTION**
VERFAHREN ZUR VERWALTUNG EINER VORRICHTUNG ZUR MOTORDREHMOMENTVERTEILUNG NACH EINEM DEFEKT DES WAHLSCHALTERS
METHOD OF MANAGING A DEVICE FOR DISTRIBUTING ENGINE TORQUE UPON A FAILURE OF ITS SELECTION BUTTON

(30) Priorité: 12.04.2010 FR 1052774
(43) Date de publication de la demande: 20.02.2013
(73) Titulaire: Renault s.a.s., 92100 Boulogne-Billancourt (FR)
(72) Inventeur: FEBRER, Pascal, F-75014 Paris (FR); FOUSSARD, François, F-76100 Rouen (FR); GUEGAN, Stéphane, F-78000 Versailles (FR); MONTI, Alessandro, F-92250 La Garenne Colombes (FR)
(86) Numéro de dépôt international: PCT/FR2011/050639
(87) Numéro de publication internationale: WO 2011/128548

(56) Documents cités:
- EP-A2- 1 471 291

## Description

### DOMAINE TECHNIQUE DE L'INVENTION

L'invention se situe dans le domaine des véhicules automobiles équipés de plusieurs trains de roue moteurs.

Plus précisément, l'invention concerne les véhicules automobiles équipés d'un dispositif de répartition du couple moteur entre les trains avant et arrière d'un véhicule à plusieurs essieux moteurs et les stratégies de gestion des défaillances d'un bouton de sélection du mode de répartition du couple moteur d'un tel dispositif.

### ÉTAT DE LA TECHNIQUE

Les véhicules à quatre roues motrices comportent un train de roues avant et un train de roues arrière dont l'un est un train de roues principal et l'autre un train secondaire. Ces véhicules comportent un premier différentiel monté sur l'essieu avant et un second monté sur l'essieu arrière, une boîte de vitesse reliant l'un des différentiels au moteur et un arbre de transmission longitudinal qui relie les deux différentiels via un actionneur, par exemple un embrayage, permettant de distribuer le couple moteur entre les trains avant et arrière. L'actionneur est piloté par une unité de commande délivrant un signal de consigne de distribution du couple.

Généralement, ces dispositifs de répartition du couple moteur présentent plusieurs modes de répartition du couple moteur et comportent un bouton de sélection permettant à l'utilisateur de sélectionner le mode de répartition du couple qu'il souhaite. Le document EP1471291 décrit un procédé comprenant les caractéristiques du préambule de la revendication 1 et montre un tel exemple de réalisation.

À titre d'exemple, les dispositifs de répartition du couple moteur présentent généralement un mode de répartition du couple « deux roues motrices » dans lequel le couple moteur n'est distribué qu'au train de roues principal, un mode de fonctionnement « quatre roues motrices - Routier » et un mode de fonctionnement « quatre roues motrices - Tout terrain ».

Dans l'art antérieur, lorsqu'une défaillance du bouton de commande est détectée, la stratégie qui est adoptée consiste le plus souvent à activer un mode de fonctionnement dégradé dans lequel le mode de répartition du couple est un mode « deux roues motrices ». Ainsi, dans ce cas, une défaillance du bouton entraîne nécessairement la perte des fonctionnalités « quatre roues motrices » du véhicule.

En outre, les stratégies de l'art antérieur, ne prévoient pas de surveiller, en fonctionnement dégradé, la fin de la défaillance, de telle sorte que le véhicule peut alterner de manière intempestive entre fonctionnement dégradé et fonctionnement nominal tant que la défaillance n'est pas résolue.

Aussi, les stratégies de gestion des défaillances du bouton de sélection ne sont pas pleinement satisfaisantes.

### OBJET DE L'INVENTION

L'invention vise à remédier à ces problèmes en proposant un procédé de gestion d'un dispositif de répartition du couple moteur entre deux trains de roues gérant les défaillances du bouton de sélection de sorte à limiter les désagréments liés une défaillance du bouton de sélection.

A cet effet, et selon un premier aspect, l'invention propose un procédé de gestion d'un dispositif de répartition du couple moteur entre un train de roues principal et un train de roues secondaire d'un véhicule automobile, ledit dispositif de répartition comportant un actionneur pour répartir ledit couple moteur, une unité de commande présentant plusieurs modes de répartition du couple moteur et adoptant l'un de ces modes de répartition en fonction d'une variable V_position et un bouton de sélection de mode de répartition délivrant une information représentative de la position dudit bouton, l'unité de commande déterminant, en fonctionnement régulier, la variable V_position, en fonction de ladite information représentative de la position dudit bouton ; ledit procédé de gestion comportant :
- une étape de détection de défaillance potentielle du bouton de sélection lors de laquelle on vérifie la cohérence de l'information représentative de la position du bouton ;
- une activation d'un fonctionnement dégradé, lorsqu'une défaillance du bouton de sélection a été détectée, dans lequel l'on attribue une valeur constante K à la variable V_position ;
- en fonctionnement dégradé, une surveillance de fin de défaillance lors de laquelle on vérifie la cohérence de l'information représentative de la position du bouton ;
- une activation d'un fonctionnement régulier, lorsqu'une fin de défaillance a été détectée.

Ainsi, le procédé de gestion selon l'invention prévoit de surveiller, en fonctionnement dégradé, la fin d'une défaillance de telle sorte que dès que l'information délivrée par le bouton de sélection est de nouveau cohérente, l'unité de commande retourne en fonctionnement régulier. Dès lors, les désagréments occasionnés par une défaillance du bouton de sélection peuvent être limités.

Cette pratique est d'autant plus avantageuse qu'en pratique, lorsque l'utilisateur remarque que le mode de répartition du couple ne correspond pas au fonctionnement qu'il souhaite, l'utilisateur aura naturellement tendance à manipuler le bouton et éventuellement à résoudre la défaillance du bouton, notamment lorsqu'il s'agit d'une défaillance liée à un mauvais positionnement du bouton.

Avantageusement, en fonctionnement régulier, le conducteur peut sélectionner un mode de répartition de couple parmi au moins trois mode de répartition du couple disponibles dans l'unité de commande, à savoir au moins un mode de répartition du couple « deux roues motrices » dans lequel le couple moteur n'est sensiblement distribué qu'au train de roues principal, un mode de répartition « quatre roues motrices - routier » et un mode de répartition « quatre roues motrices - tout terrain », en plaçant le bouton de sélection dans une position indexée parmi au moins trois incluant les positions « deux roues motrices », « quatre roues motrices - routier » et « quatre roues motrices - tout terrain » correspondant respectivement à chacun des modes de répartition du couple moteur.

Avantageusement, la constante K qui est attribuée à la variable V_position, en fonctionnement dégradé, est identique à la valeur qui est attribuée à la variable V_position, en fonctionnement régulier, lorsque l'information délivrée par le bouton est représentative de la position « quatre roues motrices - routier ».

Ainsi, le véhicule continu de bénéficier d'un mode de répartition du couple quatre roues motrices lorsque le bouton de sélection présente une défaillance. En outre, le mode de répartition « quatre roues motrices - routier » est un mode adapté à la plupart des conditions de roulage.

Avantageusement, lors de l'activation en mode « quatre roues motrices - tout terrain », l'unité de commande reste verrouillée en mode « quatre roues motrices - tout terrain » lorsque la variable de position V_position passe d'une valeur représentative de la position « quatre roues motrices - tout terrain » du bouton à une valeur représentative de la position « quatre roues motrices - routier » du bouton.

Dans ce cas, le choix d'attribuer à la variable V_position, en fonctionnement dégradé, une valeur équivalente à celle qui lui aurait été attribuée, en fonctionnement régulier, pour une position « quatre roues motrices - routier » permet de rattraper des éventuelles imperfections du bouton, notamment lorsque le bouton présente des moyens de rappel pour ramener le bouton de sa position « quatre roues motrices - tout terrain » vers sa position « quatre roues motrices - routier » et que ces moyens de rappel ont tendance à rappeler le bouton vers une position intermédiaire entre sa position « deux roues motrices » et sa position « quatre roues motrices routier ». Dans un tel cas, l'unité de commande prend tout de même en compte la demande de passage en mode « tout terrain » malgré ce défaut du bouton.

Avantageusement, le bouton de sélection est apte à délivrer une information représentative d'une position intermédiaire du bouton entre sa position « deux roues motrices » et sa position « quatre roues motrices - routier », et en ce que l'on détecte une défaillance de position intermédiaire lorsque l'information délivrée par le bouton est représentative de ladite position intermédiaire pendant une durée supérieure à T_position_intermédiaire.

Avantageusement, l'on détecte une fin de défaillance de position intermédiaire lorsque l'information délivrée par le bouton est de nouveau représentative d'une position « deux roues motrices », « quatre roues motrices - routier » ou « quatre roues motrices - tout terrain ». Dès lors, après une défaillance de position intermédiaire, dès que l'unité de commande détecte une information de positionnement du bouton cohérente, l'unité de commande retourne en fonctionnement régulier.

Avantageusement, l'on détecte une défaillance de position incohérente lorsque l'information délivrée par le bouton de sélection n'est pas représentative d'une position dudit bouton.

Avantageusement, l'on détecte une fin de défaillance de position incohérente lorsque l'information délivrée par le bouton est de nouveau représentative d'une position « deux roues motrices » puis « quatre roues motrices - routier » ou inversement. Dès lors, l'unité de commande doit détecter à la fois une information représentative d'une position « deux roues » et une information représentative d'une position « quatre roues motrices - routier » avant de retourner en fonctionnement régulier.

Avantageusement, le bouton de sélection comporte un moyen de rappel pour ramener automatiquement le bouton de sa position « quatre roues motrices - tout terrain » vers sa position « quatre roues motrices - routier », en ce que l'unité de commande est verrouillée en mode « quatre roues motrices - tout terrain » lors du retour du bouton en position « quatre roues motrices routier » et en ce que l'on détecte une défaillance de position tout terrain lorsque l'information délivrée par l'actionneur est représentative de la position « quatre roues motrices - tout terrain » pendant une durée supérieure à T_position_tout_terrain.

Avantageusement, l'on déverrouille le mode « quatre roues motrices - tout terrain » de l'unité de commande lorsqu'une défaillance de position tout terrain est détectée.

Avantageusement, l'on détecte une fin de défaillance de position tout terrain lorsque l'information délivrée par l'actionneur n'est plus représentative de la position « quatre roues motrices - tout terrain ».

### BRÈVE DESCRIPTION DES FIGURES

D'autres objets et avantages de l'invention apparaîtront au cours de la description qui suit, faite en référence aux dessins annexés, dans lesquels :
- la figure 1 est une vue schématique d'un dispositif de répartition du couple moteur et de ses périphériques ; et
- la figure 2 est une vue schématique d'un bouton de sélection du mode de répartition du couple moteur.

### EXEMPLES DE RÉALISATION

Comme exposé précédemment, l'invention vise la répartition du couple moteur entre les trains de roues d'un véhicule à plusieurs trains moteurs, tel qu'un véhicule 4 x 4. Un tel véhicule comporte au moins un train de roues avant sur lequel sont montées deux roues avant et un train de roues arrière sur lequel sont montées deux roues arrière. L'un des trains de roues est le train principal et l'autre le train secondaire. Le véhicule comporte une boîte de vitesse connectant le moteur à un premier différentiel monté sur le train principal et un arbre de transmission longitudinal reliant le premier différentiel à un second différentiel monté sur le train secondaire via un dispositif de répartition du couple.

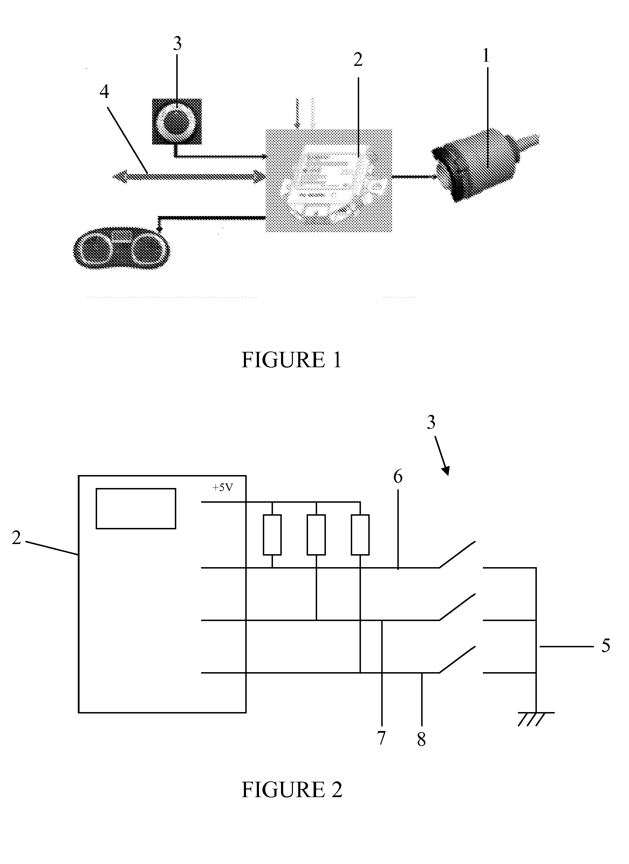

Selon l'invention, le véhicule présente un dispositif de répartition du couple, illustré sur la figure 1. Le dispositif comporte un actionneur électromécanique 1 équipé d'un dispositif d'embrayage afin de faire varier la répartition du couple moteur entre les essieux. Cet actionneur 1 est commandé par une unité de commande 2 approprié.

L'unité de commande 2 est un calculateur comportant un microcontroleur, une mémoire vive (RAM), et des mémoires mortes (ROM et EEPROM) qui hébergent un algorithme de pilotage de l'actionneur 1. Cette unité de commande 2 est reliée à un bus de communication afin d'obtenir les informations de fonctionnement du véhicule. L'unité de commande 2 est notamment reliée au module électronique de commande du moteur, au module de régulation du système de freinage et/ou au module de contrôle électronique de stabilité, par un bus de communication 4, typiquement un bus CAN. L'unité de commande 2 est alimentée par la batterie du véhicule.

L'unité de commande 2 présente au moins trois modes de répartition distincts du couple moteur : un mode « deux roues motrices », un mode « quatre roues motrices - Routier » et un mode « quatre roues motrices - Tout terrain ».

En mode deux roues motrices, le couple n'est sensiblement distribué qu'au train de roues principal. A noter, que dans certains véhicules, l'unité de commande 2 propose une fonction dans laquelle, en mode deux roues motrices, un couple minimum est appliqué au train de roues secondaire afin de limiter les bruits parasites qui sont générés par les moyens de transmission à l'arbre secondaire lorsque aucun couple ne leur est appliqué. Aussi, on entend ici par « couple sensiblement distribué qu'au train de roue principal », un taux de transmission à l'arbre secondaire faible, typiquement inférieur à 10 %.

Les modes « quatre roues motrices - routier » et « quatre roues motrices - tout terrain » correspondent à deux stratégies différentes de répartition du couple, la première étant axée sur une recherche d'un meilleur comportement sur route alors que la seconde est plutôt axée sur une recherche d'un meilleur comportement en mode tout terrain, notamment en recherchant une adhérence optimale.

A titre d'exemple, en mode « quatre roues motrices - routier », l'unité de commande 2 pilote l'actionneur 1 en fonction de la différence de vitesse de rotation observée entre les trains de roues, principal et secondaire alors que, en mode « quatre roues motrices - tout terrain », l'unité de commande 2 pilote l'actionneur 1 de sorte à ce que le taux de répartition entre le train de roue principal et le train de roue secondaire soit sensiblement constant.

L'unité de commande 2 adopte un de ses modes de répartition du couple en fonction d'une variable V_position. En fonctionnement régulier, l'unité de commande 2 détermine la valeur de la variable V_position, en fonction d'une information représentative de la position d'un bouton 3 de sélection du mode de répartition.

Ce bouton de sélection 3 présente au moins trois positions correspondant chacune à un des modes de répartition du couple, à savoir une position « deux roues motrices », une position « quatre roues motrices - Routier » et une position « quatre roues motrices - Tout terrain ». La position « quatre roues motrices-routier » se situe entre la position « deux roues motrices » et la position « quatre roues motrices - tout terrain ».

Ce bouton 3 permet à l'utilisateur de sélectionner le mode de répartition du couple moteur qui lui convient. Pour ce faire, en fonctionnement régulier, le conducteur peut sélectionner un mode de répartition de couple en plaçant le bouton 2 de sélection dans sa position correspondante.

Dans un mode de réalisation particulier illustré sur la figure 2, le bouton de sélection 3 comporte quatre pistes distinctes 5, 6, 7, 8 et des balais ou pattes métalliques mobiles et permettant de mettre en contact ces pistes 5, 6, 7, 8 en fonction de la position du bouton 2.

Une première piste 5 correspond à la masse, une seconde piste 6 dite « 2 roues motrices » correspond à la piste qui est raccordée à la masse 5 lorsque le bouton 3 est en position deux roues motrices, une troisième piste 7 dite « quatre roues motrices - routier » est raccordée à la masse 5 lorsque le bouton 3 est dans sa position correspondante et une quatrième piste 8 dite « quatre roues motrices - tout terrain » est raccordée à la masse 5 lorsque le bouton 3 est dans sa position correspondante.

Notons que dans le mode de réalisation décrit ci-dessous, la piste « quatre roue motrice - routier » 7 est également raccordée à la masse 5 lorsque le bouton est dans la position « quatre roues motrices - tout terrain ». On notera, en outre, que le bouton 3 présente entre sa position « deux roues motrices » et sa position « quatre roues motrices - Routier » un position intermédiaire dans laquelle la seconde piste « deux roues motrices » 6 et la troisième piste « quatre roues motrices - routier » 7 sont raccordées à la masse 5.

Aussi, en fonctionnement régulier, l'unité de commande 2 attribue les valeurs suivantes à la variable V_position lorsqu'elle reçoit les informations représentatives du positionnement du bouton 3 indiquées dans les tableaux suivants :

**- V_position = Position 2 roues motrices :**

| **Pistes** | **Etat (Contact =1, Pas de contact =0)** |
|---|---|
| 4*2 | 1 |
| Routier | 0 |
| Tout terrain | 0 |

**- V_position = Position intermédiaire entre la position 2 roues motrices et la position routier:**

| **Pistes** | **Etat (Contact =1, Pas de contact =0)** |
|---|---|
| 4*2 | 1 |
| Routier | 1 |
| Tout terrain | 0 |

**- V_position = Position quatre roues motrices - routier :**

| **Pistes** | **Etat (Contact =1, Pas de contact =0)** |
|---|---|
| 4*2 | 0 |
| Routier | 1 |
| Tout terrain | 0 |

**- V_position = Position quatre roues motrices - Tout terrain :**

| **Pistes** | **Etat (Contact =1, Pas de contact =0)** |
|---|---|
| 4*2 | 0 |
| Routier | 1 |
| Tout terrain | 1 |

L'unité de commande 2 adopte alors le mode de répartition du couple en fonction de la variable V_position.

On note par ailleurs que le bouton 3 est agencé de telle sorte que les positions « 2 roues motrices » et « quatre roues motrices - routier » sont des positions stables alors que la position « tout terrain » est une position impulsionnelle, le bouton 3 étant automatiquement rappelé par des moyens de rappel de sa position « tout terrain » vers sa position « routier ».

L'unité de commande 2 reste en mode « quatre roues motrices - Tout terrain » lorsque la variable de position V_position passe d'une valeur représentative de la position « quatre roues motrices - tout terrain » du bouton 3 à une valeur représentative de la position « quatre roues motrices - routier » du bouton 3. L'unité de commande 2 est verrouillée en mode « quatre roues motrices - Tout terrain » tant qu'elle ne reçoit pas une information du bouton 3 représentative de la position « 2 roues motrices » ou qu'un événement provoquant un déverrouillage du mode « quatre roues motrices - Tout terrain » ne s'est pas déroulé.

En pratique, l'unité de commande 2 passe du mode « tout-terrain » au mode « routier », lorsque le contact est coupé pendant une durée supérieure à T_lock (cette durée doit être supérieure à la durée nécessaire au démarrage du moteur après calage qui est d'environ 30 secondes). En effet, en mode « quatre roues motrices -Tout terrain », en cas de coupure du contact et en particulier après un calage moteur (fréquent en usage tout terrain), le mode « tout terrain » est mémorisé et conservé si le conducteur remet le contact puis redémarre dans un intervalle de temps inférieur à T_lock. Si le contact reste coupé au-delà de cette durée, l'unité de commande considère qu'il s'agit d'une mission différente et redémarre en mode « quatre roues motrices routier ».

En outre, lorsque le véhicule dépasse en continue un seuil de vitesse V_fin_verrouillage pendant une durée minimum T_fin_verrouillage_vitesse, l'unité de commande retourne également en mode « quatre roues motrices -routier ».

Par ailleurs, il est également possible de déverrouiller le mode « tout-terrain » pour retourner en mode « routier » en retournant en position « quatre roues motrices tout terrain » lorsque l'unité de commande 2 est déjà en mode « quatre roues motrices tout terrain ».

Aussi, l'unité de commande adopte le mode « deux roues motrices » lorsque V_position = Position deux roues motrices, adopte le mode « quatre roues motrices - routier » lorsque V_position = Position quatre roue motrice - routier et que l'unité de commande n'est pas verrouillée en mode « quatre roues motrices - tout terrain » et adopte le mode « quatre roues motrices - tout terrain » lorsque V_position = quatre roues motrices - tout terrain et que l'unité de commande 2 était précédemment en mode « quatre roues motrices - routier ».

En outre, l'unité de commande 2 adopte le mode « quatre roues motrices - routier » lorsque V_position = Position quatre roue motrice - tout terrain et que l'unité de commande vient du mode « quatre roues motrices - tout terrain ».

Le procédé selon l'invention prévoit une détection des défaillances potentielles du bouton de sélection 3. Pour cela, l'unité de commande 2 vérifie la cohérence de l'information représentative de la position du bouton 3 qu'elle reçoit.

L'unité de commande 2 vérifie notamment si l'information délivrée par le bouton de sélection 3 n'est pas représentative d'une position dudit bouton 3. Si l'information délivrée par le bouton de sélection ne représente pas une des positions indexées du bouton 3 pendant une durée supérieure à T_incohérence, une défaillance de position incohérente est détectée. A titre d'exemple, T_incohérence est de l'ordre de 100 millisecondes.

Les différentes informations pouvant délivrées par le bouton 3 et qui ne correspondent pas à des positions possibles du bouton 3 sont illustrées dans le tableau suivant :

| **Pistes** | **Etat (Contact =1, Pas de contact =0)** | | | |
|---|---|---|---|---|
| 4*2 | 0 | 0 | 1 | 1 |
| Routier | 0 | 0 | 0 | 1 |
| tout terrain | 0 | 1 | 1 | 1 |

Ces états correspondent à une déconnexion du bouton 3 ou à un court-circuit entre les pistes 5, 6, 7 et/ou 8.

Par ailleurs, l'unité de commande 2 vérifie également que le bouton 3 ne se retrouve pas bloquée en position « quatre roues motrices - Tout terrain » pendant une durée trop importante. En effet, comme nous l'avons mentionné ci-dessus, la position « quatre roues motrices - Tout terrain» est une position instable, impulsionnelle, puisqu'un moyen de rappel ramène automatiquement le bouton 3 de sélection vers sa position « quatre roues motrices - Routier ». Aussi, dans un fonctionnement régulier du bouton 3, celui-ci ne doit rester que très peu de temps en position « quatre roues motrices - tout terrain ».

Par conséquent, une défaillance de position tout terrain est détectée lorsque l'information reçue par l'unité de commande est, pendant une durée supérieure à T_position_tout_terrain, représentative d'un positionnement du bouton de sélection en position, instable, « quatre roues motrices - Tout terrain ». Typiquement, T_position_tout_terrain est de l'ordre de 10 secondes.

Lorsque une défaillance de position tout terrain est détectée, l'unité de commande 3 déverrouille le mode « quatre roues motrices - tout terrain ».

En outre, l'on détecte également une défaillance lorsque le bouton 3 demeure anormalement longtemps dans une position intermédiaire, instable, entre sa position « deux roues motrices » et sa position « quatre roues motrices - routier ». Aussi, l'on détecte une défaillance de position intermédiaire lorsque l'information délivrée par le bouton est représentative de ladite position intermédiaire pendant une durée supérieure à T_position_intermédiaire. Typiquement, T_position_intermédiaire est de l'ordre de 10 secondes.

Selon l'invention, l'on active un fonctionnement dégradé dès lors qu'une défaillance du bouton de sélection a été détectée. En fonctionnement dégradé, on attribue à la variable V_position une valeur constante K et l'unité de commande adopte alors un des modes de répartition en fonction de cette constante.

De préférence, la constante K qui est attribuée à la variable V_position, en fonctionnement dégradé, est identique à la valeur qui est attribuée à la variable V_position, en fonctionnement régulier, lorsque l'information délivrée par le bouton 3 est représentative de la position « quatre roue motrice - routier ». En d'autres termes, V_position = K = Position quatre roues motrices - routier.

Ce choix est particulièrement avantageux. En effet, d'une part, le véhicule continu de bénéficier d'un mode de répartition du couple quatre roues motrices lorsque le bouton de sélection 3 présente une défaillance.

D'autre part, ce choix permet de rattraper des éventuelles imperfections du bouton 3. En effet, certains boutons présentent des imperfections mécaniques telles que les moyens de rappel pour ramener le bouton de sa position « quatre roues motrices - tout terrain » vers sa position « quatre roues motrices - routier » ont tendance à rappeler le bouton vers une position intermédiaire entre sa position « deux roues motrices » et sa position « quatre roues motrices routier ». Dans un tel cas, une défaillance de position intermédiaire est détectée et l'on attribue à la variable V_position une valeur équivalente à celle qui lui aurait été attribué, en fonctionnement régulier, pour une position « quatre roues motrices - routier » du bouton 3. Dès lors, la demande de passage en mode « tout terrain » est bien prise en compte par l'unité de commande 2.

Par ailleurs, selon l'invention, en fonctionnement dégradé, l'on surveille la fin de la défaillance détectée en vérifiant la cohérence de l'information représentative de la position du bouton 3. Lorsqu'une fin de défaillance a été détectée, l'unité de commande réactive le fonctionnement régulier.

En pratique, lorsque l'utilisateur détecte que le mode de répartition du couple ne correspond pas au fonctionnement qu'il souhaite, l'utilisateur aura naturellement tendance à manipuler le bouton 3. Dans certains cas, cette manipulation sera suffisante pour que la défaillance du bouton 3 soit résolue et qu'en conséquence, l'unité de commande 2 retourne dans un fonctionnement régulier.

L'unité de commande 2 détecte une fin de défaillance de position incohérente lorsque l'information délivrée par le bouton 3 est de nouveau représentative d'une position « deux roues motrices » puis « quatre roues motrices - Routier » ou inversement.

Par ailleurs, l'unité de commande 2 détecte une fin de défaillance de position intermédiaire lorsque l'information délivrée par le bouton 3 est de nouveau représentative d'une position « deux roues motrices », « quatre roues motrices - Routier » ou « quatre roues motrices - Tout terrain ».

Enfin, l'unité de commande 2 détecte une fin de défaillance de position tout terrain lorsque l'information délivrée par le bouton 3 n'est plus représentative de la position « quatre roues motrices - tout terrain ».

L'invention est décrite dans ce qui précède à titre d'exemple. Il est entendu que l'homme du métier est à même de réaliser différentes variantes de réalisation de l'invention sans pour autant sortir du cadre de l'invention.

## Revendications

1. Procédé de gestion d'un dispositif de répartition du couple moteur entre un train de roues principal et un train de roues secondaire d'un véhicule automobile, ledit dispositif de répartition comportant un actionneur (1) pour répartir ledit couple moteur, une unité de commande (2) présentant plusieurs modes de répartition du couple moteur et adoptant l'un de ces modes de répartition en fonction d'une variable V_position et un bouton (3) de sélection de mode de répartition délivrant une information représentative de la position dudit bouton (3), l'unité de commande (2) déterminant, dans un fonctionnement régulier, la variable V_position, en fonction de ladite information représentative de la position dudit bouton (3) ; **caractérisé en ce que** ledit procédé de gestion comporte :
- une étape de détection de défaillance potentielle du bouton (3) de sélection lors de laquelle on vérifie la cohérence de l'information représentative de la position du bouton ;
- une activation d'un fonctionnement dégradé, lorsqu'une défaillance du bouton (3) a été détectée, dans lequel l'on attribue une valeur constante K à la variable V_position ;
- en fonctionnement dégradé, une surveillance de fin de défaillance lors de laquelle on vérifie la cohérence de l'information représentative de la position du bouton (3) ;
- une activation d'un fonctionnement régulier, lorsqu'une fin de défaillance a été détectée.

2. Procédé selon la revendication 1, **caractérisé en ce que**, en fonctionnement régulier, le conducteur peut sélectionner un mode de répartition de couple parmi au moins trois mode de répartition du couple disponibles dans l'unité de commande, à savoir au moins un mode de répartition du couple « deux roues motrices » dans lequel le couple moteur n'est sensiblement distribué qu'au train de roues principal, un mode de répartition « quatre roues motrices - routier » et un mode de répartition « quatre roues motrices - tout terrain », en plaçant le bouton de sélection (3) dans une position indexée parmi au moins trois incluant les positions « deux roues motrices », « quatre roues motrices - routier » et « quatre roues motrices - tout terrain » correspondant respectivement à chacun des modes de répartition du couple moteur.

3. Procédé selon la revendication 1 ou 2, **caractérisé en ce que** la constante K qui est attribuée à la variable V_position, en fonctionnement dégradé, est identique à la valeur qui est attribuée à la variable V_position, en fonctionnement régulier, lorsque l'information délivrée par le bouton (3) est représentative de la position « quatre roues motrices - routier ».

4. Procédé selon la revendication 3, **caractérisé en ce que**, lors de l'activation du mode « quatre roues motrices -tout terrain », l'unité de commande reste verrouillée en mode « quatre roues motrices - tout terrain » lorsque la variable de position V_position passe d'une valeur représentative de la position « quatre roues motrices - tout terrain » du bouton à une valeur représentative de la position « quatre roues motrices - routier » du bouton (3).

5. Procédé selon l'une des revendications 2 à 4, **caractérisé en ce que** le bouton (3) de sélection est apte à délivrer une information représentative d'une position intermédiaire du bouton (3) entre sa position « deux roues motrices » et sa position « quatre roues motrices - routier », et **en ce que** l'on détecte une défaillance de position intermédiaire lorsque l'information délivré par le bouton (3) est représentative de ladite position intermédiaire pendant une durée supérieure à T_position_intermédiaire.

6. Procédé selon la revendication 5, **caractérisé en ce que** l'on détecte une fin de défaillance de position intermédiaire lorsque l'information délivrée par le bouton (3) est de nouveau représentative d'une position « deux roues motrices », « quatre roues motrices - routier » ou « quatre roues motrices - tout terrain ».

7. Procédé selon l'une des revendications 1 à 6, **caractérisé en ce que** l'on détecte une défaillance de position incohérente lorsque l'information délivrée par le bouton (3) de sélection n'est pas représentative d'une position dudit bouton.

8. Procédé selon la revendication 7, **caractérisé en ce que** l'on détecte une fin de défaillance de position incohérente lorsque l'information délivrée par le bouton (3) est de nouveau représentative d'une position « deux roues motrices » puis « quatre roues motrices - Routier » ou inversement.

9. Procédé selon l'une des revendications 2 à 8, **caractérisé en ce que** le bouton de sélection (3) comporte un moyen de rappel pour ramener automatiquement le bouton (3) de sa position « quatre roues motrices - tout terrain » vers sa position « quatre roues motrices - routier », **en ce que** l'unité de commande est verrouillée en mode « quatre roues motrices - tout terrain » lors du retour du bouton en position « quatre roues motrices routier » et **en ce que** l'on détecte une défaillance de position tout terrain lorsque l'information délivrée par l'actionneur est représentative de la position « quatre roues motrices - tout terrain » pendant une durée supérieure à T_position_tout_terrain.

10. Procédé selon la revendication 9, **caractérisé en ce que** l'on déverrouille le mode « quatre roues motrices - tout terrain » de l'unité de commande (2) lorsqu'une défaillance de position tout terrain est détectée.

11. Procédé selon la revendication 9 ou 10, **caractérisé en ce que** l'on détecte une fin de défaillance de position verrouillée lorsque l'information délivrée par le bouton (3) n'est plus représentative de la position « quatre roues motrices - tout terrain ».

## Patentansprüche

1. Verfahren zur Verwaltung einer Vorrichtung zur Motordrehmomentverteilung zwischen einem Hauptradsatz und einem sekundären Radsatz eines Kraftfahrzeugs, wobei die Verteilungsvorrichtung einen Aktuator (1) zur Verteilung des Motordrehmoments, eine Steuereinheit (2), die mehrere Modi zur Verteilung von Motordrehmoment aufweist und einen dieser Verteilungsmodi als Funktion einer Variablen V_Stellung annimmt, und einen Schalter (3) zur Wahl des Verteilungsmodus, der eine Information, die die Stellung des Schalters (3) angibt, liefert, umfasst, wobei die Steuereinheit (2) bei Normalbetrieb die Variable V_Stellung in Abhängigkeit von der Information, die die Stellung des Schalters (3) angibt, bestimmt; **dadurch gekennzeichnet, dass** das Verwaltungsverfahren Folgendes umfasst:
- einen Schritt des Detektierens des potenziellen Ausfalls des Wahlschalters (3), bei dem die Kohärenz der Information, die die Stellung des Schalters angibt, geprüft wird;
- eine Aktivierung eines eingeschränkten Betriebs, wenn ein Ausfall des Schalters (3) detektiert wurde, bei der man der Variablen V_Stellung einen konstanten Wert K zuweist;
- bei eingeschränktem Betrieb, eine Überwachung des Endes des Ausfalls, bei der man die Kohärenz der Information, die die Stellung des Schalters (3) angibt, prüft;
- eine Aktivierung eines Normalbetriebs, wenn ein Ende des Ausfalls detektiert wurde.

2. Verfahren nach Anspruch 1, **dadurch gekennzeichnet, dass** der Fahrer bei Normalbetrieb einen Drehmomentverteilungsmodus unter mindestens drei in der Steuereinheit verfügbaren Drehmomentverteilungsmodi, und zwar mindestens einen "Zweiradantrieb"-Drehmomentverteilungsmodus, bei dem das Motordrehmoment im Wesentlichen nur an den Hauptradsatz verteilt wird, einen "Vierradantrieb - Straßen"-Verteilungsmodus und einen "Vierradantrieb - Gelände"-Verteilungsmodus, durch Bewegen des Wahlschalters (3) in eine indizierte Stellung unter mindestens drei, die die Stellungen "Zweiradantrieb", "Vierradantrieb - Straße" und "Vierradantrieb - Gelände" umfassen, die jedem der Motordrehmomentverteilungsmodi entsprechend entsprechen, auswählen kann.

3. Verfahren nach Anspruch 1 oder 2, **dadurch gekennzeichnet, dass** die Konstante K, die der Variablen V_Stellung bei eingeschränktem Betrieb zugewiesen wird, identisch zu dem Wert ist, der der Variablen V_Stellung bei Normalbetrieb zugewiesen wird, wenn die durch den Schalter (3) gelieferte Information die Stellung "Vierradantrieb - Straße" anzeigt.

4. Verfahren nach Anspruch 3, **dadurch gekennzeichnet, dass** die Steuereinheit bei Aktivierung des Modus "Vierradantrieb - Gelände" im Modus "Vierradantrieb - Gelände" verriegelt bleibt, wenn die Stellungsvariable V_Stellung von einem Wert, der die Stellung "Vierradantrieb - Gelände" des Schalters angibt, auf einen Wert, der die Stellung "Vierradantrieb - Straße" des Schalters (3) angibt, wechselt.

5. Verfahren nach einem der Ansprüche 2 bis 4, **dadurch gekennzeichnet, dass** der Wahlschalter (3) dazu ausgeführt ist, eine Information zu liefern, die eine Zwischenstellung des Schalters (3) zwischen seiner Stellung "Zweiradantrieb" und seiner Stellung "Vierradantrieb - Straße" angibt, und dass ein Zwischenstellungsausfall detektiert wird, wenn die durch den Schalter (3) gelieferte Information die Zwischenstellung während einer Dauer, die über T_Zwischenstellung liegt, anzeigt.

6. Verfahren nach Anspruch 5, **dadurch gekennzeichnet, dass** ein Ende des Zwischenstellungsausfalls detektiert wird, wenn die durch den Schalter (3) gelieferte Information wieder eine Stellung "Zweiradantrieb", "Vierradantrieb - Straße" oder "Vierradantrieb - Gelände" anzeigt.

7. Verfahren nach einem der Ansprüche 1 bis 6, **dadurch gekennzeichnet, dass** ein inkohärenter Stellungsausfall detektiert wird, wenn die von dem Wahlschalter (3) gelieferte Information keine Stellung des Schalters anzeigt.

8. Verfahren nach Anspruch 7, **dadurch gekennzeichnet, dass** ein Ende des inkohärenten Stellungsausfalls detektiert wird, wenn die durch den Schalter (3) gelieferte Information wieder eine Stellung "Zweiradantrieb" und dann "Vierradantrieb - Straße" oder umgekehrt anzeigt.

9. Verfahren nach einem der Ansprüche 2 bis 8, **dadurch gekennzeichnet, dass** der Wahlschalter (3) ein Rückstellmittel zum automatischen Zurückbringen des Schalters (3) aus seiner Stellung "Vierradantrieb - Gelände" in seine Stellung "Vierradantrieb - Straße" umfasst, dass die Steuereinheit bei Rückkehr des Schalters in die Stellung "Vierradantrieb - Straße" im Modus "Vierradantrieb - Gelände" verriegelt wird, und dass ein Geländestellungsausfall detektiert wird, wenn die vom Aktuator gelieferte Information die Position "Vierradantrieb - Gelände" für eine Dauer, die über T_Geländestellung liegt, anzeigt.

10. Verfahren nach Anspruch 9, **dadurch gekennzeichnet, dass** der Modus "Vierradantrieb - Gelände" der Steuereinheit (2) entsperrt wird, wenn ein Geländestellungsausfall detektiert wird.

11. Verfahren nach Anspruch 9 oder 10, **dadurch gekennzeichnet, dass** ein Ende des Verriegelungsstellungsausfalls detektiert wird, wenn die vom Schalter (3) gelieferte Information nicht mehr die Stellung "Vierradantrieb - Gelände" anzeigt.

## Claims

1. Method of managing a device for distributing engine torque between a main wheel set and a secondary wheel set of a motor vehicle, said distribution device comprising an actuator (1) for distributing said engine torque, a control unit (2) having several modes of distributing the engine torque and adopting one of these modes of distribution as a function of a variable V_position and a distribution mode selection button (3) delivering an item of information representative of the position of said button (3), the control unit (2) determining, in regular operation, the variable V_position, as a function of said item of information representative of the position of said button (3); **characterized in that** said management method comprises:
- a step of detecting potential failure of the selection button (3) during which the consistency of the item of information representative of the position of the button is checked;
- activation of degraded operation, when a failure of the button (3) has been detected, wherein a constant value K is allocated to the variable V_position;
- in degraded operation, monitoring of failure end during which the consistency of the item of information representative of the position of the button (3) is checked;
- activation of regular operation, when a failure end has been detected.

2. Method according to Claim 1, **characterized in that**, in regular operation, the driver can select a torque distribution mode from at least three torque distribution modes available in the control unit, namely at least a "two-wheel drive" torque distribution mode wherein the engine torque is only substantially distributed to the main wheel set, a "four-wheel drive - Road" distribution mode and a "four-wheel drive - Off-road" distribution mode, by placing the selection button (3) in one indexed position from at least three including the positions "two-wheel drive", "four-wheel drive - Road" and "four-wheel drive - Off-road" corresponding to each of the engine torque distribution modes respectively.

3. Method according to Claim 1 or 2, **characterized in that** the constant K which is allocated to the variable V_position, in degraded operation, is identical to the value which is allocated to the variable V position, in regular operation, when the item of information delivered by the button (3) is representative of the "four-wheel drive - Road" position.

4. Method according to Claim 3, **characterized in that**, during the activation of the "four-wheel drive - Off-road" mode, the control unit remains locked in "four-wheel drive - Off-road" mode when the position variable V_position moves from a value representative of the "four-wheel drive - Off-road" position of the button to a value representative of the "four-wheel drive - Road" position of the button (3).

5. Method according to one of Claims 2 to 4, **characterized in that** the selection button (3) is suitable for delivering an item of information representative of an intermediate position of the button (3) between the "two-wheel drive" position thereof and the "four-wheel drive - Road" position thereof, and **in that** an intermediate position failure is detected when the item of information delivered by the button (3) is representative of said intermediate position for a duration greater than T_intermediate_position.

6. Method according to Claim 5, **characterized in that** an intermediate position failure end is detected when the item of information delivered by the button (3) is again representative of a "two-wheel drive", "four-wheel drive - Road" or "four-wheel drive - Off-road" position.

7. Method according to one of Claims 1 to 6, **characterized in that** an inconsistent position failure is detected when the item of information delivered by the selection button (3) is not representative of a position of said button.

8. Method according to Claim 7, **characterized in that** an inconsistent position failure end is detected when the item of information delivered by the button (3) is again representative of a "two-wheel drive" then "four-wheel drive - Road" position, or vice versa.

9. Method according to one of Claims 2 to 8, **characterized in that** the selection button (3) comprises a return means for automatically bringing the button (3) back from the "four-wheel drive - Off-road" position thereof to the "four-wheel drive - Road" position thereof, **in that** the control unit is locked in "four-wheel drive - Off-road" mode during the return of the button into the "four-wheel drive - Road" position and **in that** an Off-road position failure is detected when the item of information delivered by the actuator is representative of the "four-wheel drive - Off-road" position for a duration greater than T_off-road_position.

10. Method according to Claim 9, **characterized in that** the "four-wheel drive - Off-road" mode of the control unit (2) is unlocked when an Off-road position failure is detected.

11. Method according to Claim 9 or 10, **characterized in that** a locked position failure end is detected when the item of information delivered by the button (3) is no longer representative of the "four-wheel drive - Off-road" position.
